# EUROPÄISCHE PATENTSCHRIFT

(11) **EP 1 187 746 B1**
(45) Veröffentlichungstag und Bekanntmachung des Hinweises auf die Patenterteilung: **06.08.2003**
(21) Anmeldenummer: 00935025.7
(22) Anmeldetag: 16.05.2000
(51) Int. Cl.: B60T 8/32, B60T 13/66

(54) **BREMSSYSTEM FÜR EIN FAHRZEUG**
BRAKE SYSTEM FOR A MOTOR VEHICLE
SYSTEME DE FREINAGE POUR AUTOMOBILE

(30) Priorität: 29.06.1999 DE 19929959
(43) Veröffentlichungstag der Anmeldung: 20.03.2002
(73) Patentinhaber: DaimlerChrysler AG, 70567 Stuttgart (DE)
(72) Erfinder: KIESEWETTER, Wolfgang, D-71155 Altdorf (DE); KNOFF, Bernd, D-73734 Esslingen (DE); STEINER, Manfred, D-71364 Winnenden (DE)
(86) Internationale Anmeldenummer: EP0004363
(87) Internationale Veröffentlichungsnummer: WO01002230

(56) Entgegenhaltungen:
- EP-A- 0 819 591
- WO-A-95/01898
- WO-A-98/13244
- DE-A- 4 427 246
- DE-A- 19 501 760
- DE-A- 19 520 609
- DE-A- 19 524 939
- DE-A- 19 641 470
- DE-C- 4 329 140
- US-A- 5 779 329

## Beschreibung

Die Erfindung betrifft ein Bremssystem für ein Fahrzeug nach dem Oberbegriff des Anspruches 1.

Aus der gattungsbildenden DE 43 29 140 C1 ist ein Bremssystem mit zwei Bremskreisen bekannt, das zur Durchführung eines automatischen Bremsvorgangs eine Bremskraft-Unterstützungseinrichtung aufweist. Das Zuschalten der Bremskraft-Unterstützungseinrichtung erfolgt dann, wenn das Bremspedal sehr schnell betätigt wird. Hierfür weist das Bremssystem einen Pedal- Positionssensor und einen Drucksensor auf.

Aus der DE 195 20 609 A1 geht hervor, zur Messung des Drucks am Ausgang des Hauptbremszylinders in beiden Bremskreisen des Bremssystems einen Drucksensor anzuordnen.

Die EP 08 19 591 A1 offenbart ein Verfahren durch Durchführung eines automatischen Bremsvorgangs, wobei die Bremskraft-Unterstützungseinrichtung zunächst zugeschaltet wird, wenn die Gaspedalrücknahmegeschwindigkeit einen bestimmten Schwellwert überschreitet und dieses vorläufige Zuschalten nur dann aufrecht erhalten wird, wenn innerhalb eines bestimmten Zeitfensters eine Bremspedalbetätigung erfolgt. Bei diesem Verfahren kommen allerdings keine Drucksensoren zum Einsatz.

Ausgehend vom gattungsgemäßen Stand der Technik ist es die Aufgabe der vorliegenden Erfindung bei kürzeren Reaktionszeiten des Bremssystems eine präzisere Definition der Situationen, in denen eine Zuschaltung erfolgen soll, zu ermöglichen.

Diese Aufgabe wird erfindungsgemäß durch die Merkmale des Patentanspruches 1 gelöst.

Erfindungsgemäß wird eine vorläufige, vorbeugende Zuschaltung, die zeitlich begrenzt ist, für den Fall durchgeführt, dass der höhere Vergleichswert eines Sensors überschritten ist, der niedrigere Vergleichswert des zweiten Sensors jedoch noch nicht erreicht worden ist. In dieser Situation sind die Bedingungen für eine unbegrenzte Zuschaltung noch nicht erreicht, gleichwohl wird für den begrenzten Zeitraum zugeschaltet und wird die Zuschaltung vorteilhaft aufrechterhalten, sofern innerhalb des Zuschaltungszeitraums der reduzierte Vergleichswert des zweiten Sensors überschritten wird. Werden innerhalb des definierten Zeitraums die Bedingungen für eine dauerhafte Zuschaltung nicht erreicht, so wird automatisch ein Abschalt-Stellsignal erzeugt.

Diese Vorgehensweise bietet den Vorteil, daß innerhalb einer kürzeren Reaktionszeit zusätzliche Bremskraft zur Verfügung gestellt wird. Außerdem wird die Rückwirkung auf den Fahrer verringert, da die Bremswirkung aufgrund der zeitlichen Begrenzung erst teilweise zur Geltung kommt. Irritationen des Fahrers werden vermieden.

Die Erzeugung des Zuschalt-Stellsignals wird zweckmäßig für den Fall erzeugt, daß für beide Sensoren aus zeitlich aufeinanderfolgenden Meßsignalen jeweils ein Gradient ermittelt wird und die Gradienten der beiden Sensoren jeweils einen Vergleichswert übersteigen. Darüberhinaus kann aber als alternatives Kriterium für die Zuschaltung der Gradient eines Sensors und der absolute Wert des zweiten Sensors berücksichtigt werden. Weiterhin ist es möglich, die absoluten Werte beider Sensoren zur Beurteilung heranzuziehen, ob eine Zuschaltung erfolgen soll.

Zur Abschaltung der Bremskraft-Unterstützungseinrichtung reicht es zweckmäßig aus, daß das Meßsignal nur eines Sensors einen Vergleichswert unterschreitet. Durch diese Vorgehensweise wird sichergestellt, daß auch bei einem Ausfall eines Sensors die automatische Erzeugung von Bremskraft wieder abgeschaltet wird, sofern das Meßsignal von wenigstens einem intakten Sensor ein Meßsignal liefert, das innerhalb des Werte-Abschaltbereichs liegt. Dadurch können Betriebssituationen vermieden werden, in denen das Bremssystem versehentlich Bremskraft liefert, obwohl keine Situation mehr vorliegt, die die Bereitstellung zusätzlicher Bremskraft rechtfertigt; das Bremssystem ist hinsichtlich der Abschaltung redundant ausgelegt, die Betriebssicherheit wird erhöht.

Die Werte des Zuschaltbereichs und des Abschaltbereichs können differieren, beispielsweise, indem bei höheren Werten bzw. bei höheren, aus den absoluten Meßsignalen abgeleiteten Gradienten zugeschaltet als abgeschaltet wird. Die unterschiedlichen Zuschalt- und Abschaltbedingungen erhöhen die Sicherheit gegen versehentliches, unbeabsichtigtes Aktivieren des Bremssystems.

Es kann zweckmäßig sein, daß zusätzlich ein Wegsensor vorgesehen ist. Für den Fall, daß ein Drucksensor und ein Wegsensor vorgesehen sind, wird bevorzugt aus aufeinanderfolgenden Meßsignalen des Wegsensors ein aktueller Geschwindigkeitswert ermittelt und gemeinsam mit dem Druckgradienten des Drucksensors der Abfrage zugrunde gelegt, ob das Bremssystem zugeschaltet werden soll. Als alternative Bedingung kann aber auch die Kombination Druckwert/Geschwindigkeitswert oder Druckgradient/Weg berücksichtigt werden.

Als Abschalt-Stellsignal genügt es in vorteilhafter Ausgestaltung, daß nur das Meßsignal des Wegsensors einen Vergleichswert unterschreitet.

Es kann zweckmäßig sein, alternative Bedingungen sowohl für das Zuschalten als auch für das Abschalten des Bremssystems vorzusehen. Ein Zuschalten bzw. Abschalten erfolgt dann für den Fall, daß nur eine der formulierten Bedingungen erfüllt ist.

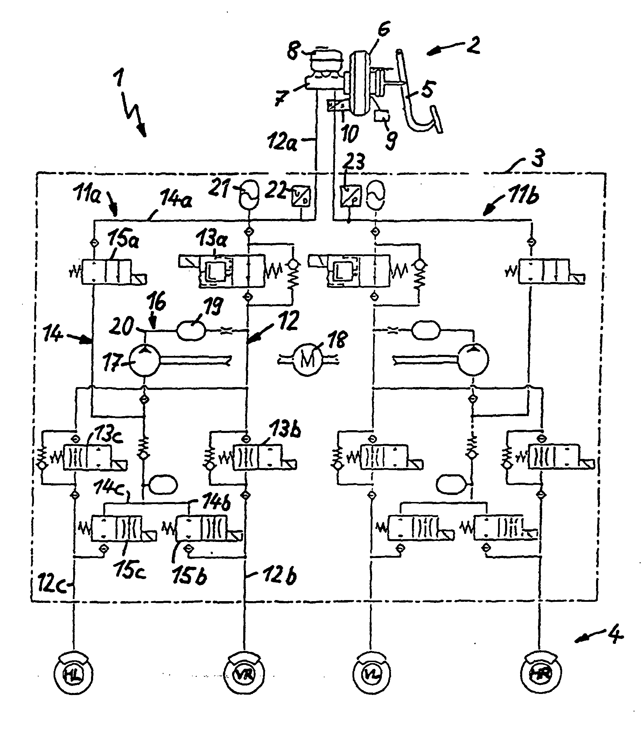

Weitere Vorteile und zweckmäßige Ausführungsformen sind den weiteren Ansprüchen, der Figurenbeschreibung und der Zeichnung zu entnehmen, in der ein Schaltplan eines erfindungsgemäßen hydraulischen Bremssystems dargestellt ist.

Das Bremssystem 1 eines Kraftfahrzeugs umfaßt eine Betätigungseinheit 2 zur Aktivierung der Radbremse durch den Fahrer, eine Hydraulikeinheit 3 zur Übertragung und Modulation des erforderlichen Bremsdrucks und Rad-Bremseinheiten 4 an den Fahrzeugrädern vorne links (VL), vorne rechts (VR), hinten links (HL) und hinten rechts (HR). Die Betätigungseinheit 2 besteht aus einem Bremspedal 5, einem Verstärker 6, einem Hauptzylinder 7 und einem Reservoirtank 8; darüberhinaus ist der Betätigungseinheit 2 ein Löseschaiter 9 sowie ein Wegsensor 10 zugeordnet. Die Hydraulikeinheit 3 umfaßt zwei Bremskreise 11a, 11b, die spiegelbildlich aufgebaut sind. Der erste Bremskreis 11a versorgt die Rad-Bremseinheiten HL und VR mit Bremsdruck, der zweite Bremskreis 11b ist den Rad-Bremseinheiten VL und HR zugeordnet.

Anstelle des Löseschalters 9 kann auch ein Bremslichtschalter eingesetzt werden.

Bei einer Betätigung des Bremspedals 5 wird die vom Fahrer aufgebrachte Pedalkraft vom Verstärker 6 überhöht, wobei die -vom Verstärker 6 generierte Kraft im Hauptzylinder 7, welcher vom Reservoirtank 8 mit Hydraulikmedium gespeist wird, in einen hydraulischen Bremsdruck gewandelt wird, der den beiden Bremskreisen 11a, b der Hydraulikeinheit 3 zugeführt wird.

Die folgende Beschreibung der Hydraulikeinheit 3 bezieht sich nur auf den ersten Bremskreis 11a, der zweite Bremskreis 11b ist im gezeigten Ausführungsbeispiel analog zum ersten Bremskreis 11a aufgebaut. Sämtliche Komponenten der Hydraulikeinheit 3 sind über Signale einer nicht dargestellten Steuereinheit einstellbar.

Der im Hauptzylinder 7 erzeugte Bremsdruck wird über eine Hydrauiikleitung 12 den Rad-Bremseinheiten HL und VR des ersten Bremskreises 11a zugeführt. Die Hydraulikleitung 12 umfaßt drei Abschnitte 12a, b, c, wobei ein erster, vom Hauptzylinder 7 abzweigender Abschnitt 12a sich in zwei weitere Abschnitte 12b, c aufteilt, welche jeweils einer Rad-Bremseinheit VR bzw. HL zugeordnet sind. In jedem Abschnitt 12a, b, c der Hydraulikleitung 12 ist ein Stellventil 13a, b, c angeordnet, jedem Stellventil 13a, b, c ist ein Rückschlagventil zugeordnet, wobei das dem ersten Stellventil 13a im gemeinsamen Leitungsabschnitt 12a zugeordnete Rückschlagventil in Richtung der Rad-Bremseinheiten öffnet, die den weiteren Stellventilen 13b, c zugeordneten Rückschlagventile öffnen dagegen in Richtung Betätigungseinheit 2. Der gemeinsame Leitungsabschnitt 12a ist stromauf des Stellventils 13a mit einem Ausgleichsspeicher 21 verbunden.

Betätigt der Fahrer das Bremspedal 2 und erzeugt dadurch einen Bremsdruck, so werden mittels Stellsignalen der Steuereinheit die Stellventile 13a, b, c in Öffnungsstellung versetzt, so daß der Bremsdruck aus der Betätigungseinheit 2 den Rad-Bremseinheiten 4 zur Erzeugung einer Rad-Bremskraft zugeführt werden kann.

Der Rückfluß des Hydraulikmediums erfolgt über eine Rückführleitung 14, die aus zwei Leitungsabschnitten 14b, c, welche von den Zufuhr-Leitungsabschnitten 12b, c abzweigen, und einem gemeinsamen Leitungsabschnitt 14a besteht, in den die Abschnitte 14b, c einmünden und der wiederum in den oberen Abschnitt 12a der Hydraulikleitung 12 mündet. In jedem Abschnitt 14a, b, c der Rückführleitung 14 ist ein Stellventil 15a, b, c angeordnet, im oberen Leitungsabschnitt 14a befindet sich zwischen dem Zusammenschluß der unteren Leitungsabschnitte 14b, c und dem oberen Stellventil 15a ein Zwischenspeicher und ein in Rückflußrichtung öffnendes Rückschlagventil. Die Stellventile 15a, b, c können über die Steuereinheit zum Rückfluß des Hydraulikmediums geöffnet werden.

Weiterhin ist im Bremskreis 11a der Hydraulikeinheit 3 eine automatische Bremskraft-Unterstützungseinrichtung 16 vorgesehen, die eine Hydraulikpumpe 17, einen Hydraulikmotor 18 und einen Zwischenspeicher 19 in einer Leitung 20 umfaßt, die vom Abschnitt 14a der Rückführleitung 14 abzweigt und die in den gemeinsamen Leitungsabschnitt 12a der Hydraulikleitung 12 stromab des Stellventils 13a mündet. Bei Betätigung des Hydraulikmotors 18 bzw. der Hydraulikpumpe 17 wird zusätzlicher Bremsdruck erzeugt, der in den gemeinsamen Leitungsabschnitt 12a eingespeist und den Rad-Bremseinheiten 4 zugeführt wird, wodurch eine überhöhte Bremskraft erzeugt wird. Die Betätigung von Hydraulikmotor 18 bzw. Hydraulikpumpe 17 - sowohl das Einschalten als auch das Abschalten - wird durch Stellsignale der Steuereinheit in Abhängigkeit von Eingangssignalen ausgelöst, welche als Meßsignale von den Sensoren 9, 10 in der Betätigungseinheit 2 sowie von weiteren Sensoren 22, 23 in der Hydraulikeinheit 3 erzeugt werden.

Der Sensor 9 in der Betätigungseinheit 2 ist als Löseschalter ausgebildet, der im Verstärker 6 installiert ist und die Funktion hat, die automatische Bremskraft-Unterstützungseinrichtung 16 abzuschalten, sobald das Bremspedal 5 aus einer Betätigungsstellung heraus einen Löseweg in Richtung Ausgangsstellung zurücklegt. In diesem Fall nimmt der Fahrer die Pedalkraft zurück, woraus abgeleitet werden kann, daß keine zusätzliche Bremskraftunterstützung mehr erforderlich ist, woraufhin die Unterstützungseinrichtung abgeschaltet wird.

Der weitere Sensor 10 in der Betätigungseinheit 2 ist als Wegsensor ausgebildet, der entweder die Stellbewegung des Bremspedals oder die mit der Stellbewegung des Bremspedals korrespondierende Stellbewegung des Zylinders im Hauptzylinder 7 sensiert. Der Sensor 22 in der Hydraulikeinheit 3 ist als Drucksensor ausgebildet, der im gemeinsamen Leitungsabschnitt 12a angeordnet ist und den Druck in der Hydraulikleitung 12 mißt.

Die Zuschaltung der Bremskraft-Unterstützungseinrichtung 16 erfolgt für den Fall, daß zumindest eines der folgenden Kriterien erfüllt ist:
- Aus aufeinanderfolgenden Meßsignalen des Drucksensors 22 wird in der Steuereinheit der Druckgradient in der Hydraulikleitung 12 ermittelt. In entsprechender Weise wird aus aufeinanderfolgenden Meßsignalen des Wegsensors 10 die Geschwindigkeit ermittelt, mit der das Bremspedal 5 bzw. der Zylinder des Hauptzylinders 7 bewegt wird. Überschreiten sowohl der Druckgradient als auch die Geschwindigkeit einen jeweils zugeordneten Vergleichswert, so wird ein Zuschalt-Stellsignal zur Aktivierung der Unterstützungseinrichtung 16 erzeugt.
- Der im Drucksensor 22 ermittelte Druckwert und der aus den Meßsignalen des Wegsensors 10 abgeleitete Geschwindigkeitswert übersteigen einen jeweils zugeordneten Vergleichswert.
- Der aus den Meßsignalen des Drucksensors 22 abgeleitete Druckgradient und der im Wegsensor ermittelte Weg übersteigen einen jeweils zugeordneten Vergleichswert.
- Die Meßsignale des Drucksensors 22 und die Meßsignale des Drucksensors 23 übersteigen jeweils einen Vergleichswert. Als Meßsignale können Druckwerte und/oder Druckgradienten herangezogen werden. Anstelle einer auf zwei Bremskreise verteilten Anordnung der Drucksensoren kann es auch zweckmäßig sein, beide Drucksensoren in einem Bremskreis anzuordnen.

Die Meßsignale der Sensoren müssen jeweils einen zugeordneten Vergleichswert überschreiten, damit ein Zuschalt-Stellsignal erzeugt wird. Die Vergleichswerte weisen in dem Fall, dass zwei gleichartige Sensoren vorgesehen sind, unterschiedlich hohe Werte auf, wobei der niedrigere Wert durch Multiplikation des höheren Wertes mit einem Reduktionsfaktor, der zweckmäßig zwischen 0,5 und 1 liegt, erzielt wird.

Dabei wird erfindungsgemäß eine zweistufige Zuschaltung realisiert. Nachdem der höhere Vergleichswert eines Drucksensors überschritten ist, der niedrigere Vergleichswert des zweiten Drucksensors aber noch nicht erreicht ist, erfolgt eine vorläufige Zuschaltung für eine begrenzte Zeit, die wieder aufgehoben wird, sofern innerhalb des vorgegebenen Zeitraums der niedrigere Vergleichswert des zweiten Drucksensors nicht überschritten wird. Die Zeitspanne, nach der sich die vorläufige Zuschaltung bemißt, beträgt vorteilhaft zwischen einem und zehn Bearbeitungszyklen des Bremssystems.

Falls in beiden Drucksensoren gleichzeitig jeweils ein höherer und zumindest ein niedrigerer Vergleichswert überschritten wird, erfolgt eine Zuschaltung ohne zeitliche Begrenzung. In diesem Fall wird erst abgeschaltet, wenn die Abschaltungsbedingungen erfüllt sind.

Die Abschaltung der Bremskraft-Unterstützungseinrichtung 16 erfolgt über den Löseschalter 9 für den Fall, daß ein Kraft-Vergleichswert unterschritten wird. Der Löseschalter schaltet in Abhängigkeit der auf das Bremspedal wirkenden Pedalkraft.

Die Abschaltung kann auch erfolgen, wenn das Messsignal des Wegsensors 10 einen Vergleichswert unterschreitet, der sich vom entsprechenden Vergleichswert für die Zuschaltung unterscheiden kann, insbesondere einen höheren Absolutwert annehmen kann, um eine relativ schnelle Abschaltung der Unterstützungseinrichtung zu erreichen. Darüberhinaus können weitere Abschaltkriterien formuliert werden, die vom Druckwert, vom Druckgradienten oder von der Geschwindigkeit der Stellbewegung des Bremspedals abhängen. Werden die Abschaltkriterien in Abhängigkeit der Sensorwerte des Wegsensors 10 oder des Drucksensors 22 formuliert, so kann auf den Löseschalter 9 auch verzichtet werden.

Zwei unterschiedliche Meßprinzipien durch Anwendung eines Druck- und eines Wegsensors zu berücksichtigen hat den Vorteil, daß die Ausfallwahrscheinlichkeit der Bremskraft-Unterstützungseinrichtung 16 reduziert wird, weil die verschiedenartigen Sensoren in unterschiedlicher Weise auf eine Störung reagieren.

Im zweiten Bremskreis 11b ist ein weiterer Drucksensor 23 vorgesehen, der den Druck in der zweiten, den Bremskreis 11b versorgenden Hydraulikleitung mißt. Durch die zweifache Ausführung der Drucksensoren in unterschiedlichen Bremskreisen ist das Bremssystem redundant ausgelegt und kann mit einschränkenden Bedingungen formuliert werden.

Eine Zuschaltung der Bremskraft-Unterstützungseinrichtung erfolgt beispielsgemäß dann, wenn die Druckgradienten beider Drucksensoren 22, 23 einen Vergleichswert überschreiten, wobei die Vergleichswerte unterschiedlich hoch sind. In einer alternativen Ausführung wird zugeschaltet, wenn der Gradient eines Drucksensors und der Druckwert des zweiten Drucksensors jeweils einen Vergleichswert überschreiten. In beiden Fällen kann ein Zeitfenster vorgegeben werden, innerhalb dem die Meßsighale die vorgeschriebenen Bedingungen erfüllen müssen.

Die Abschaltung erfolgt für den Fall, daß eines der beiden Drucksignale einen weiteren Vergleichswert - die Abschaltschwelle - unterschreitet.

Die zwei Drucksensoren sind in unterschiedlichen Bremskreisen angeordnet.

Als bevorzugte Ausführungsformen werden im gesamten Bremssystem ausschließlich zwei Drucksensoren eingesetzt. Als Äquivalent zum Drucksensor bzw. zu den Drucksensoren kann auch ein Kraftsensor bzw. können Kraftsensoren eingesetzt werden.

Es kommt sowohl eine Anwendung in offenen als auch in geschlossenen Hydraulikkreisläufen des Bremssystems in Betracht. Das erfindungsgemäße Bremssystem kann sowohl mit diagonal aufgeteilten Bremskreisen als auch mit achsweise aufgeteilten Bremskreisen realisiert werden.

## Patentansprüche

1. Bremssystem mit zwei Bremskreisen (11a, 11b) für ein Fahrzeug, mit einer Bremskraft-Unterstützungseinrichtung (16) zur automatischen Erzeugung von Bremskraft, und mit einem Drucksensor (22; 23) oder Kraftsensor und einem weiteren Sensor (22; 23) zur Erzeugung von eine Fahreraktivität repräsentierenden Meßsignalen, das einer Bremsdruck-Steuereinheit zugeführt wird, wobei für den Fall, daß die Meßsignale der Sensoren (22, 23) jeweils einen Vergleichswert übersteigen, die Bremsdruck-Steuereinheit ein Zuschalt-Stellsignal zur Betätigung der Bremskraft-Unterstützungseinrichtung (16) erzeugt wird,
**dadurch gekennzeichnet,**
**daß** der weitere Sensor (22; 23) als Drucksensor (22; 23) oder Kraftsensor ausgeführt ist, so daß zwei Drucksensoren (22, 23) oder Kraftsensoren vorgesehen sind, denen unterschiedlich hohe Vergleichswerte zugeordnet sind, wobei jeder Drucksensor (22; 23) oder Kraftsensor einem der Bremskreise (11a; 11b) zugeordnet ist, und daß das Zuschalt-Stellsignal für eine vorläufige, zeitlich begrenzte Zuschaltung der Bremskraft-Unterstützungseinrichtung (16) für den Fall erzeugt wird, daß der höhere Vergleichswert des ersten Drucksensors (22; 23) oder Kraftsensors überschritten ist und der niedrigere Vergleichswert des zweiten Drucksensors (22; 23) oder Kraftsensors noch nicht erreicht ist.

2. Bremssystem nach Anspruch 1,
**dadurch gekennzeichnet,**
**daß** als Meßsignale absolute Werte und/oder Gradienten erzeugt werden.

3. Bremssystem nach Anspruch 1 oder 2,
**dadurch gekennzeichnet,**
**daß** der zweite Vergleichswert durch Multiplikation des ersten Vergleichswerts mit einem Reduktionsfaktor kleiner als eins erzeugt wird.

4. Bremssystem nach einem der Ansprüche 1 bis 3,
**dadurch gekennzeichnet,**
**daß** die vorläufige Zuschaltung für eine begrenzte, definierte Anzahl an Bearbeitungszyklen der Bremsdruck-Steuereinheit aufrecht erhalten wird und danach ein Abschalt-Stellsignal zur Deaktivierung der Bremskraft-Unterstützungseinrichtung (16) erzeugt wird.

5. Bremssystem nach einem der Ansprüche 1 bis 4,
**dadurch gekennzeichnet,**
**daß** die vorläufige Zuschaltung aufrecht erhalten wird, falls das Meßsignal des zweiten Druck- oder Kraftsensors (22; 23) innerhalb einer definierten Anzahl an Bearbeitungszyklen der Bremsdruck-Steuereinheit den reduzierten Vergleichswert überschreitet.

6. Bremssystem nach einem der Ansprüche 1 bis 5,
**dadurch gekennzeichnet,**
**daß** die Bremsdruck-Steuereinheit ein die Bremskraft-Unterstützungseinrichtung (16) abschaltendes Abschalt-Stellsignal erzeugt wird, falls das Meßsignal von einem der Druck- oder Kraftsensoren (22, 23) einen Vergleichswert unterschreitet.

7. Bremssystem nach einem der Ansprüche 1 bis 6,
**dadurch gekennzeichnet,**
**daß** zusätzlich wenigstens ein Wegsensor (10) zur Messung der Fahreraktivität vorgesehen ist.

8. Bremssystem nach Anspruch 7,
**dadurch gekennzeichnet,**
**daß** das Züschalt-Stellsignal erzeugt wird, falls der Druck- oder Kraftgradient eines Druck- oder Kraffsensors (22, 23) und der aus aufeinanderfolgenden Meßsignalen des Wegsensors (10) ermittelte Geschwindigkeitswert jeweils einen Vergleichswert übersteigen.

9. Bremssystem nach Anspruch 7 oder 8,
**dadurch gekennzeichnet,**
**daß** das Zuschalt-Stellsignal erzeugt wird, falls der Druck- oder Kraftwert des Druck- oder Kraftsensors (22, 23) und der Geschwindigkeitswert des Wegsensors (10) jeweils einen Vergleichswert übersteigen.

10. Bremssystem nach einem der Ansprüche 7 bis 9,
**dadurch gekennzeichnet,**
**daß** das Zuschalt-Stellsignal erzeugt wird, falls der Druch- oder Kraftgradient des Druck- oder Kraftsensors (22, 23) und der Weg des Wegsensors (10) jeweils einen Vergleichswert übersteigen.

11. Bremssystem nach einem der Ansprüche 7 bis 10,
**dadurch gekennzeichnet,**
**daß** die Bremsdruck-Steuereinheit ein Abschalt-Stellsignal erzeugt, falls das Meßsignal des Wegsensors (10) einen Vergleichswert unterschreitet.

12. Bremssystem nach einem der Ansprüche 1 bis 11,
**dadurch gekennzeichnet,**
**daß** ein Löseschalter (9) zur Abschaltung der Bremskraft-Unterstützungseinrichtung vorgesehen ist, der im Bremskraftverstärker (6) des Bremssystems (1) installiert ist, wobei durch die Bremsdruck - Steuereinheit ein Abschalt-Stellsignal erzeugt wird, falls das Meßsignal des Löseschalters (9) einen Vergleichswert unterschreitet.

13. Bremssystem nach einem der Ansprüche 1 bis 12,
**dadurch gekennzeichnet,**
**daß** die Meßsignale der Sensoren (10, 22, 23) zur Erzeugung des Zuschalt-Stellsignals sich innerhalb eines definierten Zeitfensters ereignen müssen.

## Claims

1. Brake system with two brake circuits (11a, 11b) for a vehicle, with a braking force support device (16) for automatic production of braking force, and with a pressure sensor (22; 23) or power sensor and a further sensor (22; 23) for producing a measurement signal that is representative of driver activity and is fed to a brake pressure control unit, whereby, in the case where the measurement signals of the sensors (22, 23) exceed a comparison value, the brake-pressure has a connection regulation signal, for operating the braking force support device (16), produced for it
**characterized in that**
the further sensor (22; 23) is implemented as a pressure sensor (22; 23) or power sensor, such that two pressure sensors (22; 23) or power sensors are provided that have different comparison values associated with them, whereby each pressure sensor (22; 23) or power sensor is assigned to one of the brake circuits (11a; 11b), and **in that** the connection regulation signal is produced, for a temporary, limited connection of the braking force support device (16), for the case where the higher comparison value of the first pressure sensor (22; 23) or the power sensor is exceeded and the lower comparison value of the second pressure sensor (22; 23) or power sensor has still not been reached.

2. Brake system in accordance with claim 1,
**characterized in that**
absolute values and/or gradients are produced as measurement signals.

3. Brake system in accordance with claim 1 or 2,
**characterized in that**
the second comparison value is produced by multiplication of the first comparison value by a reduction factor of less than one.

4. Brake system in accordance with one of claims 1 to 3,
**characterized in that**
the preliminary connection, for a limited, specific number of processing cycles of the brake pressure control unit, is retained, and thereafter a disconnection regulation signal is produced to de-actuate the braking force support device (16).

5. Brake system in accordance with one of claims 1 to 4,
**characterized in that**
the preliminary connection is maintained if the measurement signal of the second pressure or power sensor (22; 23) exceeds the reduced comparison value within a specific number of cycles of processing of the brake pressure control unit.

6. Brake system in accordance with one of claims 1 to 5,
**characterized in that**
a disconnection regulation signal, is produced for the brake pressure control unit, if the measurement signal of one of the pressure of power sensors (22; 23) falls below a comparison value.

7. Brake system in accordance with one of claims 1 to 6,
**characterized in that**
a displacement sensor (10), for measuring driver activity, is additionally provided.

8. Brake system in accordance with claim 7,
**characterized in that**
the connection regulation signal is produced if the pressure or power gradient of a pressure or power sensor (22, 23) and the speed determined from successive measurement signals of the displacement sensor (10) exceed, in a given case, a comparison value.

9. Brake system in accordance with claim 7 or 8,
**characterized in that**
the connection adjustment signal is produced if the pressure or force value of the pressure or power sensor (22, 23) and the speed value of the displacement sensor (10) exceed, in a given case, a comparison value.

10. Brake system in accordance with one of claims 7 to 9,
**characterized in that**
the connection adjustment signal is produced if the pressure or force gradient of the pressure or force sensor (22, 23) and the displacement of the displacement sensor (10) exceed, in a given case, a comparison value.

11. Brake system in accordance with one of claims 7 to 10,
**characterized in that**
the brake pressure control unit produces a disconnection adjustment signal if the measurement signal of the displacement sensor (10) exceeds a comparison value.

12. Brake system in accordance with one claims 1 to 11,
**characterized in that**
a release switch (9) is provided, for disconnecting the braking force support device, that is installed in the braking force intensifier (6) of the brake system (1), whereby a disconnection adjustment signal is produced by the brake pressure control unit if the measurement signal of the release switch (9) falls below a comparison value.

13. Brake system in accordance with one of claims 1 to 12,
**characterized in that**
the measurement signals of the sensors (10, 22, 23), for producing the connection adjustment signal, must arise within a specific time window.

## Revendications

1. Système de freinage avec deux circuits de freinage (11a, 11b) pour un véhicule, avec un dispositif d'assistance au freinage (16) pour la génération automatique de la force de freinage et avec un capteur de pression (22; 23) ou un capteur de force et un autre capteur (22; 23) pour générer des signaux de mesure représentant une activité du conducteur qui sont envoyés à une unité de commande de la pression de freinage, moyennant quoi, dans le cas où les signaux de mesure des capteurs (22; 23) dépassent respectivement une valeur comparative, l'unité de commande de la pression de freinage génère un signal de réglage de mise en circuit pour l'actionnement du dispositif d'assistance au freinage (16), **caractérisé en ce que** l'autre capteur (22; 23) est conçu comme un capteur de pression (22; 23) ou comme un capteur de force, de sorte qu'il est prévu deux capteurs de pression (22; 23) ou capteurs de force auxquels sont associées des valeurs comparatives de hauteur différente, chaque capteur de pression (22; 23) ou capteur de force étant associé à l'un des circuits de freinage (11a; 11b), et **en ce que** le signal de réglage de mise en circuit est généré pour une mise en circuit provisoire, limitée dans le temps, du dispositif d'assistance au freinage (16) pour le cas où la valeur de comparaison plus élevée du premier capteur de pression (22; 23) ou capteur de force serait dépassée et où la valeur de comparaison plus basse du second capteur de pression (22; 23) ou capteur de force ne serait pas encore atteinte.

2. Système de freinage selon la revendication 1, **caractérisé en ce que** les signaux de mesure générés sont des valeurs absolues et/ou des gradients.

3. Système de freinage selon la revendication 1 ou 2, **caractérisé en ce que** la seconde valeur de comparaison est générée en multipliant la première valeur de comparaison par un facteur de réduction inférieur à un.

4. Système de freinage selon l'une quelconque des revendications 1 à 3, **caractérisé en ce que** la mise en circuit provisoire pour un nombre défini, limité, de cycles de traitement de l'unité de commande de la pression de freinage est maintenue et qu'ensuite, un signal de réglage de mise hors circuit est généré pour désactiver le dispositif d'assistance au freinage (16).

5. Système de freinage selon l'une quelconque des revendications 1 à 4, **caractérisé en ce que** la mise en circuit provisoire est maintenue au cas où le signal de mesure du second capteur de pression ou de force (22; 23) dépasse la valeur de comparaison réduite au bout d'un nombre défini de cycles de traitement de l'unité de commande de la pression de freinage.

6. Système de freinage selon l'une quelconque des revendications 1 à 5, **caractérisé en ce que** l'unité de commande de la pression de freinage génère un signal de réglage de mise hors circuit mettant hors circuit le dispositif d'assistance au freinage (16) au cas où le signal de mesure de l'un des capteurs de pression ou de force (22; 23) est inférieur à une valeur de comparaison.

7. Système de freinage selon l'une quelconque des revendications 1 à 6, **caractérisé en ce qu'**il est prévu, en plus, au moins un capteur de déplacement (10) pour mesurer l'activité du conducteur.

8. Système de freinage selon la revendication 7, **caractérisé en ce que** le signal de réglage de mise en circuit est généré au cas où le gradient de pression ou de force d'un capteur de pression ou de force (22; 23) et la valeur de la vitesse déterminée à partir des signaux de mesure successifs du capteur de déplacement (10) dépassent chacun une valeur de comparaison.

9. Système de freinage selon la revendication 7 ou 8, **caractérisé en ce que** le signal de réglage de mise en circuit est généré au cas où la valeur de pression ou de force du capteur de pression ou de force (22; 23) et la valeur de la vitesse du capteur de déplacement (10) dépassent chacune une valeur de comparaison.

10. Système de freinage selon l'une quelconque des revendications 7 à 9, **caractérisé en ce que** le signal de réglage de mise en circuit est généré au cas où le gradient de pression ou de force du capteur de pression ou de force (22; 23) et le déplacement du capteur de déplacement (10) dépassent chacun une valeur de comparaison.

11. Système de freinage selon l'une quelconque des revendications 7 à 10, **caractérisé en ce que** l'unité de commande de la pression de freinage génère un signal de réglage de mise hors circuit au cas où le signal de mesure du capteur de déplacement (10) est inférieur à une valeur de comparaison.

12. Système de freinage selon l'une quelconque des revendications 1 à 11, **caractérisé en ce qu'**il est prévu un commutateur de desserrage (9) qui est installé dans le servofrein (6) du système de freinage (1), un signal de réglage de mise hors circuit étant généré par l'unité de commande de la pression de freinage au cas où le signal de mesure du commutateur de desserrage (9) est inférieur à une valeur de comparaison.

13. Système de freinage selon l'une quelconque des revendications 1 à 12, **caractérisé en ce que** les signaux de mesure des capteurs (10, 22, 23) pour la génération du signal de réglage de mise en circuit doivent se produire à l'intérieur d'une fenêtre temporelle définie.
